# EUROPÄISCHE PATENTSCHRIFT

(11) **EP 4 076 909 B1**
(45) Veröffentlichungstag und Bekanntmachung des Hinweises auf die Patenterteilung: **11.09.2024**
(21) Anmeldenummer: 20830122.6
(22) Anmeldetag: 14.12.2020
(51) Int. Cl.: B29C 65/58

(54) **DEKORATIVES FUNKTIONSBAUTEIL MIT EINER TRANSPARENTEN TEILFLÄCHE**
DECORATIVE FUNCTIONAL COMPONENT HAVING A TRANSPARENT PARTIAL SURFACE
COMPOSANT FONCTIONNEL DÉCORATIF AYANT UNE SURFACE PARTIELLE TRANSPARENTE

(30) Priorität: 18.12.2019 DE 102019008780
(43) Veröffentlichungstag der Anmeldung: 26.10.2022
(73) Patentinhaber: KOSTAL Automobil Elektrik GmbH & Co. KG, 58513 Lüdenscheid (DE)
(72) Erfinder: ESDERS, Berthold, 58579 Schalksmühle (DE); PÜHL, Thorsten, 58769 Nachrodt-Wiblingwerde (DE); THIEL, Matthias, 58511 Lüdenscheid (DE)
(74) Vertreter: Kerkmann, Detlef
(86) Internationale Anmeldenummer: PCT/EP2020/085911
(87) Internationale Veröffentlichungsnummer: WO 2021/122419

(56) Entgegenhaltungen:
- DE-A1- 102013 212 445
- DE-C1- 3 726 225

## Beschreibung

Die Erfindung betrifft ein dekoratives Funktionsbauteil mit einer transparenten Teilfläche, aufweisend einen Kunststoffträger aus einem ersten Kunststoffmaterial, der eine Ausnehmung besitzt, und einen flächigen Abdeckkörper aus einem transparenten zweiten Kunststoffmaterial, der die Ausnehmung des Kunststoffträgers abdeckt oder ausfüllt.

Bekannt sind als Zweikomponentenspritzgussteile gefertigte Bauteile, die einen transparenten Teilbereich oder ein vollflächig transparentes, möglicherweise hinter einer dekorativen Folie hinterspritztes Formteil erhalten, das in einem weiteren Schritt teilweise oder vollflächig hinterspritzt wird. Diese Bauteile enthalten große mechanische Spannungen.

Aus der deutschen Patentschrift DE 37 26 225 C1 ist eine Anzeigevorrichtung für ein Endgerät einer Fernmeldevermittlungsanlage bekannt. Diese weist eine Flüssigkristallanzeigevorrichtung auf, welche von einem transparenten Kunststoffkörper aufgenommen und federnd gehalten wird, indem dieselbe in beiden Achsen jeweils durch Federn gegen gegenüberliegende Anschläge gedrückt wird. An der Unterseite des Kunststoffkörpers ist eine mit den der Flüssigkristallanzeigevorrichtung zugeordneten Bauelementen bestückte Leiterplatte angebracht, mit welcher der Kunststoffkörper verbunden ist. Die elektrische Verbindung zwischen Flüssigkristallanzeigevorrichtung und der Leiterplatte erfolgt durch elastische, streifenförmige Verbinder.

Die deutsche Offenlegungsschrift DE 10 2013 212 445 A1 beschreibt ein optisches Element, das einen zumindest teilweise lichtdurchlässigen Formkörper umfasst, der mindestens eine erste Schicht aus einem ersten lichtdurchlässigen Kunststoff aufweist, wobei die erste Schicht zumindest in einem Teilbereich mit einer zweiten Schicht aus einem zweiten Kunststoff verbunden ist, welcher weniger lichtdurchlässig als der erste Kunststoff ist, und wobei die zweite Schicht mindestens zwei Stellen mit unterschiedlichen Dicken aufweist.

Aus der deutschen Offenlegungsschrift DE 10 2006 048 550 A1 ist ein Funktionsbauteil bekannt, welches ein Sichtfenster in einem Gehäuse aufweist. Gehäuse und Sichtfenster sind als Zweikomponentenspritzgussteil ausgeführt, wobei aneinander angrenzende Kanten des Gehäuses und des Sichtfensters eine Nut-Feder-Verbindung aufweisen.

Bevorzugt vorgesehen ist dabei, dass das Kunststoffmaterial des Sichtfensters im Bereich der Nut-Feder-Verbindung leicht anschmilzt und einen innigen Materialverbund mit dem Material des Gehäuses eingeht. Ein solch inniger Materialverbund ist durchaus vorteilhaft, wenn das Sichtfenster insbesondere flüssigkeitsdicht in das Gehäuse eingefasst werden soll. Allerdings sind hierbei auch mechanische Spannungen unvermeidlich, welch die optischen Eigenschaften des Sichtfensters beeinflussen.

Dieses ist insbesondere dann nachteilig, wenn das Sichtfenster vor einem Display angeordnet werden soll, dessen Darstellung hierdurch beeinträchtigt werden kann.

Für viele Anwendungen ist es zudem unerwünscht, wenn ein Sichtfenster als ein besonderer Bereich eines Funktionsbauteils erkennbar ist.

Es stellte sich die Aufgabe, ein gattungsgemäßes Funktionsbauteil auf einfache Weise und unter weitgehender Vermeidung der vorgenannten Nachteile zu fertigen.

Diese Aufgabe wird erfindungsgemäß dadurch gelöst, dass der Kunststoffträger und der Abdeckkörper durch einen losen Formschluss zusammengefügt sind und durch Überfluten gemeinsam mit einem niedrigviskosen aushärtenden transparenten Kunststoff beschichtet sind.

Unter einem "losen Formschluss" soll hierbei eine formschlüssige Anordnung von Bauteilen verstanden werden, deren mechanische Verbindung absichtlich spielbehaftet ausgestaltet ist.

Die Erfindung sieht somit vor, erstens, die beiden zusammengefügten Komponenten mechanisch zu entkoppeln, um mechanische Spannungen zu verhindern, und zweitens, diese Komponenten in einem weitere Schritt mittels einer transparenten elastischen Masse, vorzugsweise mit einem Polyurethan, zu überspritzen, um die Oberfläche des Funktionsbauteil so zu gestalten, dass die getrennte Anordnung der beiden Komponenten optisch kaschiert wird. Die sowohl am Kunststoffträger wie auch am Abdeckkörper anhaftende transparente Kunststoffschicht befestigt zudem die beiden Komponenten aneinander, ohne dabei mechanische Spannungen zwischen ihnen aufzubauen.

Nachfolgend soll die Erfindung anhand einer Zeichnung näher dargestellt und erläutert werden. Es zeigen
- Figur 1: einen Kunststoffträger,
- Figur 2: zwei Ausführungsvarianten eines Abdeckkörpers,
- Figur 3: Montageschritte zur Herstellung eines ersten Funktionsbauteils,
- Figur 4: Montageschritte zur Herstellung eines zweiten Funktionsbauteils,
- Figur 5: ein drittes Ausführungsbeispiel eines Funktionsbauteils,
- Figur 6: Ausführungsdetails des Funktionsbauteils gemäß der Figur 5.

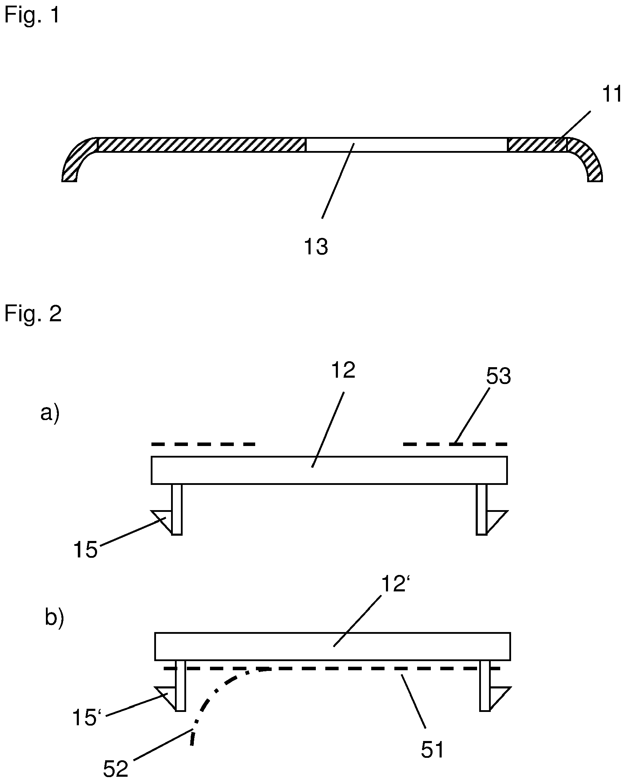

Die Figuren 1 bis 3 verdeutlichen ein erstes Ausführungsbeispiel eines Funktionsbauteils. Dieses weist einen Kunststoffträger 11 auf, der in der Figur 1 im Schnitt dargestellt ist. Der Kunststoffträger 11 ist aus einem ersten Kunststoffmaterial spritzgegossen und weist eine Ausnehmung 13 auf. Der hier skizzenhaft dargestellte Kunststoffträger 11 kann beispielsweise Teil eines Gehäuses oder einer Bedienoberfläche sein.

Ebenfalls durch Spritzgießen hergestellt ist ein transparenter oder teiltransparenter Abdeckkörper 12, 12', der in zwei Ausführungsvarianten in der Figur 2 dargestellt ist. Der Abdeckkörper 12, 12' besteht aus einem zweiten Kunststoffmaterial und verfügt über Klipshaken 15, 15', die eine lose formschlüssige Verbindung des Abdeckkörpers 12, 12' zum Kunststoffträger 11 ermöglichen. Hierbei ist der äußere Abstand der Klipshaken 15, 15' absichtlich kleiner ausgeführt als der zugehörige Querschnitt der Ausnehmung 13 am Kunststoffträger 11, so dass der Abdeckkörper 12, 12' nach dem Einklipsen spielbehaftet und frei von mechanischen Spannungen am Kunststoffträger 11 angeordnet ist.

Der Abdeckkörper 12, 12' kann bereits vor der Montage mit einer Bedruckung 53 versehen werden. Hierbei können sowohl Design-, Farbdrucke als auch funktionale elektrisch leitende Drucke auf der Oberseite oder Unterseite des Abdeckkörpers 12, 12' aufgedruckt werden.

Der Abdeckkörper 12, 12' kann entweder einstückig (Figur 2a) oder auch als eine überspritzte oder hinterspritzte Folie (Figur 2b) hergestellt sein. Die Folie kann dabei insbesondere eine funktionale Folie 51 sein, die hier nicht dargestellte elektrische Sensoren oder Anzeigeelemente aufweist. Angedeutet ist, dass die funktionale Folie 51 einen elektrischen Anschluss 52 besitzt.

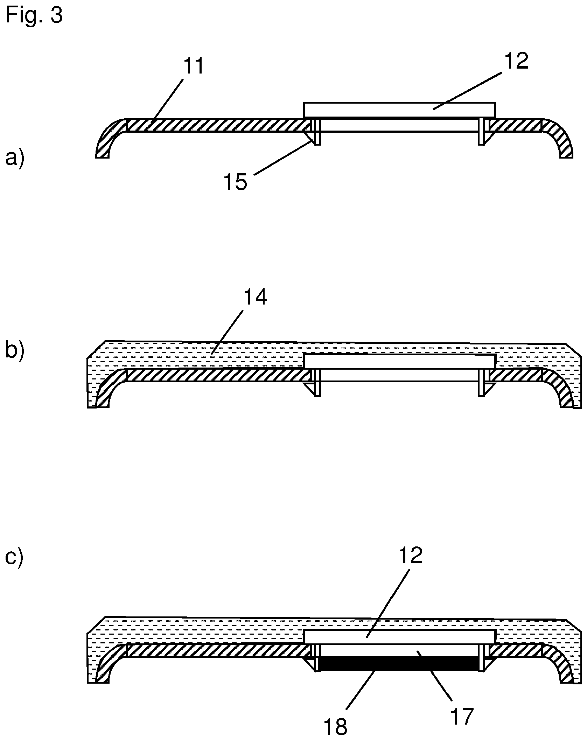

Der in der Figur 3 dargestellte Abdeckkörper 12 ist dazu vorgesehen, ein transparentes Fenster innerhalb des Kunststoffträgers 11 auszubilden und wird dazu mit seinen Klipshaken 15 in die Ausnehmung 13 des Kunststoffträgers 11 eingeklipst (Figur 3a). Danach werden die zusammengefügten Bauteile gemeinsam mittels einer transparenten niedrigviskosen Flüssigkeit überflutet, welche zu einer transparenten Kunststoffschicht 14 aushärtet (Figur 3b). Vorzugsweise wird als Überflutungsmaterial ein Polyurethan vorgesehen.

Falls das erste Kunststoffmaterial des Kunststoffträgers 11 oder das zweite Kunststoffmaterial des Abdeckkörpers 12 keine Haftung zu der niedrigviskosen Flüssigkeit aufnimmt, können die Oberflächen des Kunststoffträgers 11 und des Abdeckkörpers 12 vorher vorteilhaft mit einem Haftvermittler versehen werden.

Das durch den Abdeckkörper 12 innerhalb des Kunststoffträgers 11 geschaffene Fenster ist vorzugsweise dazu vorgesehen, den Blick auf ein Display oder ein sonstiges Anzeigeelement zu ermöglichen, das insbesondere Bestandteil des Funktionsbauteils sein kann.

Zum weiteren Aufbau eines derartigen Funktionsbauteils wird, beispielsweise mittels eines optischen Klebers 17, ein Display 18 an die Rückseite des Abdeckkörpers 12 angebracht (Figur 3c). Dieser Schritt kann entfallen, wenn der Abdeckkörper 12', wie in der Figur 2b gezeigt, bereits eine funktionale Folie 51 mit einem oder mehreren Anzeigeelementen aufweist.

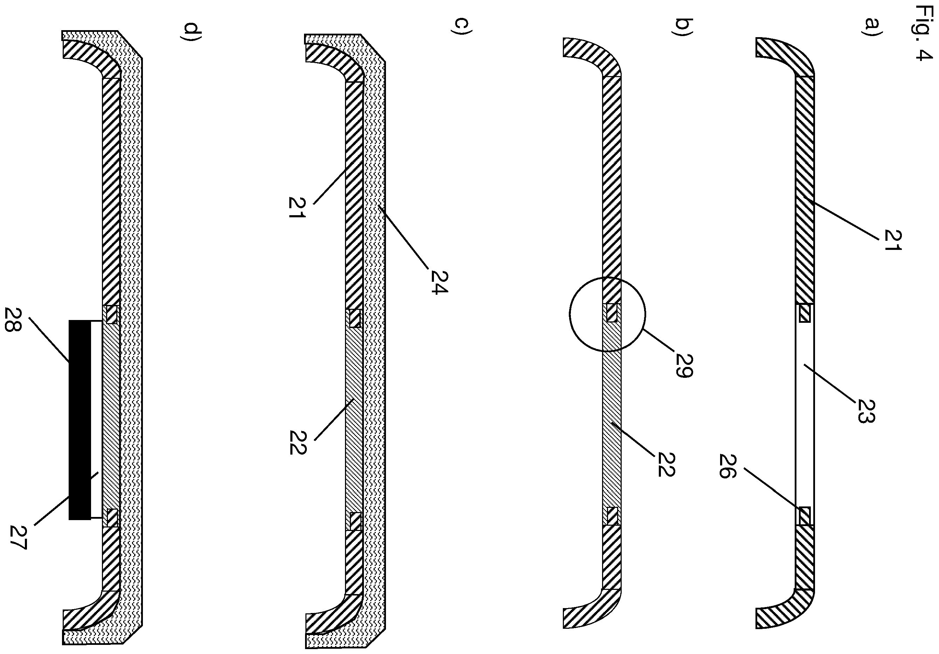

Die Figur 4 zeigt ein weiteres Ausführungsbeispiel eines Funktionsbauteils, bei dem ebenfalls zunächst durch Spritzgießen ein Kunststoffträger 21 hergestellt wird, der eine Ausnehmung 23 aufweist. Zusätzlich weist hier der innere Rand der Ausnehmung 23 einen angeformten umlaufenden Steg 26 auf (Figur 4a).

Die Ausnehmung 23 wird im folgenden Schritt in einem Spritzgießwerkzeug mit einem zweiten transparenten Kunststoffmaterial gefüllt (Figur 4b). Nach dem Aushärten bildet das zweite Kunststoffmaterial einen Abdeckkörper 22 aus, der die Ausnehmung 23 ausfüllt. Das zweite Kunststoffmaterial ist chemisch unterschiedlich zum ersten Kunststoffmaterial des Kunststoffträgers 21, und derart gewählt, dass die beiden Kunststoffmaterialien keine materialschlüssige Verbindung miteinander eingehen können.

Der umspritzte umlaufende Steg 26 bildet so eine rein formschlüssige Nut-Feder-Verbindung 29 zwischen dem Kunststoffträger 21 und dem Abdeckkörper 22 aus (Figur 4b), ohne dass deren Kunststoffmaterialien eine feste Verbindung miteinander eingehen. Erreichen lässt sich so ein loser Formschluss, bei dem der Abdeckkörper 22 zwar stabil, aber zugleich spielbehaftet und spannungsfrei innerhalb der Ausnehmung 23 des Kunststoffträgers 21 sitzt.

In einem weiteren Schritt werden die Bauteile 21, 22 mittels einer niedrigviskosen Flüssigkeit überflutet, die danach zu einer transparenten Kunststoffschicht 24 aushärtet (Figur 4c). Die Kunststoffschicht 24 stabilisiert die Anordnung des Abdeckkörpers 22 am Kunststoffträger 21, so dass sich der Abdeckkörper 22, trotz der losen, spannungsfreien Anbindung, nicht mehr relativ zum Kunststoffträger 21 verschieben kann. Zugleich kaschiert die Kunststoffschicht 24 optisch die mehrteilige Ausführung der darunterliegenden Oberfläche.

Die Figur 4d zeigt wiederum die Möglichkeit auf, mittels eines optischen Klebers 27 an der Unterseite des Abdeckkörpers 22 ein Display 28 anzubringen.

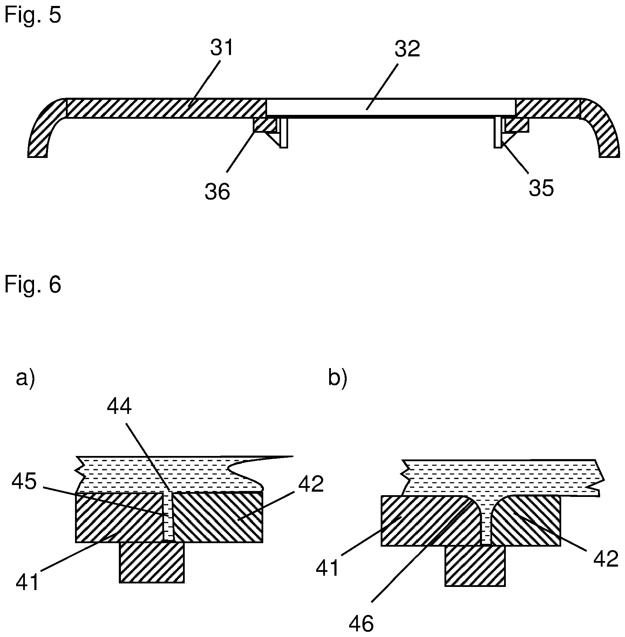

Figur 5 zeigt als Ausführungsvariante zur Ausführungsform gemäß der Figur 3 einen Kunststoffträger 31 mit einen Ebenenversatz. Hierbei bildet der Kunststoffträger 31 am Rand seiner Ausnehmung einen umlaufenden abgekröpften Anlagesteg 36 aus, an dem die Klipshaken 35 eines Abdeckkörpers 32 verrasten. Der abgekröpfte Anlagesteg 36 ermöglicht es, den Abdeckkörper 32 so in die Ausnehmung des Kunststoffträgers 31 einzusetzen, dass die Oberfläche des Abdeckkörpers 32 bündig mit der Oberfläche des Kunststoffträgers 31 abschließt.

Hierdurch kann die, hier nicht dargestellte Kunststoffbeschichtung, im Vergleich zu der Kunststoffschicht 14 bei der Ausführungsform gemäß der Figur 3 sehr dünn ausgeführt werden, da diese hier nicht einen Großteil des Volumens des Abdeckkörper 32 umschließen muss.

Die Figur 6 zeigt zwei Beispiele eines möglichen Übergangsdesign zwischen einem Kunststoffträger 41 und einem Abdeckkörper 42. Bei einem Funktionsbauteil können zwischen dem Kunststoffträger 41 und dem Abdeckkörper 42 beispielsweise enge gerade Spalte 45 (Figur 6a) oder bei Bauteilen mit abgerundeten Rändern Spalte mit Übergangsradien 46 (Figur 6b) geschaffen werden, die beim Überflutungsvorgang durch die niedrigviskose Flüssigkeit, welche nach dem Aushärten die transparente Kunststoffschicht 44 ausbildet, ausgefüllt werden.

### Bezugszeichen

- 11, 21, 31, 41: Kunststoffträger
- 12, 12', 22, 32, 42: Abdeckkörper
- 13, 23: Ausnehmung
- 14, 24, 44: transparente(r) Kunststoff(schicht)
- 15, 15', 35: Klipshaken
- 17, 27: optischer Kleber
- 18,28: Display
- 26: umlaufender Steg
- 29: Nut-Feder-Verbindung
- 36: abgekröpfter umlaufender Anlagesteg
- 45: gerader Spalt
- 46: Spalte mit Übergangsradien
- 51: funktionale Folie
- 52: elektrischer Anschluss
- 53: Bedruckung

## Patentansprüche

1. Dekoratives Funktionsbauteil mit einer transparenten Teilfläche, aufweisend einen Kunststoffträger (11, 21, 31, 41) aus einem ersten Kunststoffmaterial, der eine Ausnehmung (13, 23) besitzt, und einen flächigen Abdeckkörper (12, 12', 22, 32, 42) aus einem transparenten zweiten Kunststoffmaterial, der die Ausnehmung (13, 23) des Kunststoffträgers (11, 21, 31, 41) abdeckt oder ausfüllt,
**dadurch gekennzeichnet,**
**dass** der Kunststoffträger (11, 21, 31, 41) und der Abdeckkörper (12, 12', 22, 32, 42) durch einen losen Formschluss zusammengefügt sind und durch Überfluten gemeinsam mit einem niedrigviskosen aushärtenden transparenten Kunststoff (14, 24, 44) beschichtet sind.

2. Dekoratives Funktionsbauteil nach Anspruch 1, **dadurch gekennzeichnet, dass** die formschlüssige Verbindung eine durch Klipshaken (15, 15', 35) hergestellte Rastverbindung ist.

3. Dekoratives Funktionsbauteil nach Anspruch 1, **dadurch gekennzeichnet, dass** die formschlüssige Verbindung eine Nut-Feder-Verbindung (29) ist.

4. Dekoratives Funktionsbauteil nach Anspruch 1, **dadurch gekennzeichnet, dass** das erste und zweite Kunststoffmaterial keine stoffschlüssige Verbindung miteinander eingehen.

5. Dekoratives Funktionsbauteil nach Anspruch 1, **dadurch gekennzeichnet, dass** an der Unterseite des Abdeckkörpers (12, 12', 22, 32, 42) ein Display (18, 28) angeordnet ist.

6. Dekoratives Funktionsbauteil nach Anspruch 1, **dadurch gekennzeichnet, dass** der niedrigviskose transparente Kunststoff (14, 24, 44) ein Polyurethan ist.

7. Dekoratives Funktionsbauteil nach Anspruch 1, **dadurch gekennzeichnet**, das der Kunststoffträger (11, 21, 31, 41) Teil eines Gehäuses ist.

8. Dekoratives Funktionsbauteil nach Anspruch 1, **dadurch gekennzeichnet**, das der Kunststoffträger (11, 21, 31, 41) Teil einer Bedienfläche ist.

## Claims

1. Decorative functional component having a transparent partial surface having a plastic carrier (11, 21, 31, 41) made of a first plastic material, which has a recess (13, 23), and a flat cover body (12, 12', 22, 32, 42) made of a transparent second plastic material, which covers or fills the recess (13, 23) of the plastic carrier (11, 21, 31, 41),
**characterized in that**,
that the plastic carrier (11, 21, 31, 41) and the cover body (12, 12', 22, 32, 42) are joined together by a loose form fit and are jointly coated by flooding with a low-viscosity curing transparent plastic (14, 24, 44).

2. Decorative functional component according to claim 1, **characterized in that** the form fit connection is a snap-in connection produced by clip hooks (15, 15', 35).

3. Decorative functional component according to claim 1, **characterized in that** the form fit connection is a tongue and groove connection (29).

4. Decorative functional component according to claim 1, **characterized in that** the first and second plastic materials do not form a material bond with one another.

5. Decorative functional component according to claim 1, **characterized in that** a display (18, 28) is arranged on the underside of the cover body (12, 12', 22, 32, 42).

6. Decorative functional component according to claim 1, **characterized in that** the low-viscosity transparent plastic (14, 24, 44) is a polyurethane.

7. Decorative functional component according to claim 1, **characterized in that** the plastic carrier (11, 21, 31, 41) is part of a housing.

8. Decorative functional component according to claim 1, **characterized in that** the plastic carrier (11,21,31,41) is part of a control surface.

## Revendications

1. Composant fonctionnel décoratif ayant une surface partielle transparente, présentant un support en matière plastique (11, 21, 31, 41) en un premier matériau plastique, qui possède un évidement (13, 23), et un corps de recouvrement plat (12, 12', 22, 32, 42) en un deuxième matériau plastique transparent, qui recouvre ou remplit l'évidement (13, 23) du support en matière plastique (11, 21, 31, 41),
**caractérisé en ce que**,
**en ce que** le support en matière plastique (11, 21, 31, 41) et le corps de recouvrement (12, 12', 22, 32, 42) sont assemblés par un ajustement de la forme lâche et sont revêtus conjointement par submersion avec une matière plastique transparente (14, 24, 44) durcissant à faible viscosité.

2. Composant fonctionnel décoratif selon la revendication 1, **caractérisé en ce que** l'ajustement de la forme est une liaison par encliquetage réalisée par des crochets à clipser (15, 15', 35).

3. Composant fonctionnel décoratif selon la revendication 1, **caractérisé en ce que** l'ajustement de la forme est une liaison à rainure et languette (29).

4. Composant fonctionnel décoratif selon la revendication 1, **caractérisé en ce que** le premier et le deuxième matériau plastique ne forment pas de liaison par matière entre eux.

5. Composant fonctionnel décoratif selon la revendication 1, **caractérisé en ce qu'**un écran (18, 28) est disposé sur la face inférieure du corps de recouvrement (12, 12', 22, 32, 42).

6. Composant fonctionnel décoratif selon la revendication 1, **caractérisé en ce que** la matière plastique transparente à faible viscosité (14, 24, 44) est un polyuréthane.

7. Composant fonctionnel décoratif selon la revendication 1, **caractérisé en ce que** le support en matière plastique (11, 21, 31, 41) fait partie d'un boîtier.

8. Composant fonctionnel décoratif selon la revendication 1, **caractérisé en ce que** le support en plastique (11, 21, 31, 41) fait partie d'une surface de commande.
